# EUROPÄISCHE PATENTSCHRIFT

(11) **EP 4 321 291 B1**
(45) Veröffentlichungstag und Bekanntmachung des Hinweises auf die Patenterteilung: **04.03.2026**
(21) Anmeldenummer: 23020356.4
(22) Anmeldetag: 27.07.2023
(51) Int. Cl.: B23K 26/03, B23K 26/06, B23K 26/067, B23K 26/082, B23K 26/21, B23K 26/08

(54) **LASER-SCHWEISSVORRICHTUNG UND VERFAHREN ZUR ÜBERWACHUNG, MIT EINEM LASER-SCHWEISSKOPF UND EINER ÜBERWACHUNGSEINRICHTUNG**
LASER WELDING DEVICE AND METHOD FOR MONITORING, COMPRISING A LASER WELDING HEAD AND A MONITORING DEVICE
DISPOSITIF DE SOUDAGE LASER ET PROCÉDÉ DE SURVEILLANCE, COMPRENANT UNE TÊTE DE SOUDAGE LASER ET UN DISPOSITIF DE SURVEILLANCE

(30) Priorität: 04.08.2022 DE 202022001742 U; 15.08.2022 DE 102022002959; 15.08.2022 DE 202022001804 U; 27.07.2022 DE 102022002724; 27.07.2022 DE 202022001675 U
(43) Veröffentlichungstag der Anmeldung: 14.02.2024
(73) Patentinhaber: Fritz Stepper GmbH & Co. KG, 75180 Pforzheim (DE)
(72) Erfinder: Rexroth, Bernd, 75180 Pforzheim (DE); Holtz, Ronald, 3422 Kirchberg BE (CH)
(74) Vertreter: Leitner, Waldemar

(56) Entgegenhaltungen:
- EP-A1- 2 489 459
- WO-A1-2022/004610
- DE-A1- 102016 203 511
- DE-A1- 102019 115 554
- DE-A1- 102019 127 323
- DE-A1- 102020 104 462

## Beschreibung

Die Erfindung betrifft entsprechend Anspruch 1 eine Verwendung einer Schweißvorrichtung anstelle einer Widerstandsschweißvorrichtung zum Verschweißen zweier Werkstücke, welche eine erste Zuführeinrichtung zur Zuführung eines ersten Werkstücks und eine zweite Zuführeinrichtung zur Zuführung eines zweiten Werkstücks sowie eine Positioniereinrichtung, durch welche die beiden Werkstücke in mindestens einer definierten Schweißposition aufeinander ausgerichtet sind, aufweist, und welche eine Schweißeinrichtung besitzt, durch welche ein Verschweißen der beiden relativ zueinander positionierten Werkstücke durchführbar ist, dass die Schweißvorrichtung eine Überwachungseinrichtung die reflektierte Strahlung im Bereich der Wellenlänge des oder der vom Laser-Schweißkopf austretenden Laser-Strahlen sowie im infraroten Bereich, vorzugsweise in einem zwischen 1200 und 1700 nm liegenden Bereich oder in einem oder in mehreren Teilbereichen, und/oder im Bereich des sichtbaren Lichts, vorzugsweise in einem zwischen 450 und 850 nm liegenden Bereich oder in einem oder in mehreren Teilbereichen des vorgenannten Bereichs erfasst und auswertet.

Eine derartige Schweißvorrichtung ist bekannt und wird insbesondere dazu eingesetzt, um Miniaturkontakte herzustellen, indem auf einen Metallstreifen eine Abfolge von Kontaktelementen aufgeschweißt wird. Die in einer periodischen Abfolge auf den Metallstreifen aufzubringenden Kontaktelemente werden dabei derart hergestellt, dass diese Kontaktelement von einem geeigneten Metalldraht oder Metallstreifen abgetrennt und dann in aufeinanderfolgenden Arbeitshüben der Vorrichtung von der Positioniereinrichtung jeweils an der Schweißstelle positioniert und dort verschweißt werden. Die Verschweißung erfolgt dabei durch ein an und für sich bekanntes Widerstandsschweißen. Das Widerstandsschweißen besitzt aber den Nachteil, dass die Vorrichtung hierbei einem hohen Verschleiß und einer hohen Verschmutzung unterliegt und nur mit einer geringen Hubzahl arbeiten kann.

Die DE 10 2016 203 511 A1 beschreibt eine Widerstandsschweißvorrichtung, die zwei einander gegenüberliegend angeordnete, an einer Schweißstromquelle über einen jeweiligen Stromversorgungsweg angeschlossene oder anschließbare Schweißelektroden zum Schweißen von Schweißgut, das zwischen den Elektroden anzuordnen ist, aufweist. Zumindest eine erste der beiden Elektroden ist mittels einer Zustelleinrichtung relativ zu der anderen Elektrode aus einer Elektroden-Distanzstellung in eine Schweißstellung bewegbar, um das zwischen den Elektroden befindliche Schweißgut gut zu verschweißen. Diese Zustelleinrichtung für die bewegliche Elektrode besitzt einen Elektromotor, wobei der Elektromotor ein Linearmotor mit einem Stator und einem längs einer Linearbewegungsachse linear bewegbar geführten Läufer ist und der Läufer die erste Elektrode aufweist. Derartige Widerstandsschweißvorrichtungen werden vorzugsweise in automatisierten Systemen für die Massenproduktion von Schweißteilen eingesetzt, wobei gesteuerte Schweißgut-Zuführeinrichtungen für eine kontinuierliche oder eine getaktete Zuführung des Schweißguts in Zuordnung zum Schweißtakt sorgen. Bei dem Schweißgut handelt es sich z.B. um miteinander zu verbindende Blechteile, Drahtabschnitte oder dergleichen, wobei auch das Aufschweißen von Kontaktmaterial auf Kontaktträgerflächen und das Aufschweißen von Kabelenden auf Blechteilen oder dergleichen durch Widerstandsschweißen mittels einer Widerstandsschweißvorrichtung im Massenproduktionsverfahren möglich ist.

Beim Aufschweißen von Kontaktmaterial auf Trägerflächen kommt es in der Massenfertigung von Präzisionsteilen auf eine präzise Einhaltung der vorgegebenen Prozeßparameter, wie Schweißstrom, Elektrodenkraft, Schweißdauer, usw. an. Für die Herstellung präziser Schweißverbindungen ist insbesondere auch ein gut definierter Zustellvorgang bei der Zustellung der Schweißelektroden zum Schweißgut wichtig. Dabei soll die bewegliche erste Elektrode möglichst stoß- oder prellfrei auf das Schweißgut aufsetzen und beim Aufweichen des Schweißguts an der Schweißstelle definiert nachsetzen. Besonders beim Aufschweißen von Kontaktmaterial auf ein Trägermaterial ist eine hohe Nachsetzgeschwindigkeit erforderlich, um das schmelzende Kontaktmaterial sicher zu fügen und punktförmige Schweißverbindungen von hoher Qualität zu erzielen. Maßgebend für die Qualität der entstehenden Schweißverbindungen sind neben der präzisen Steuerung des Schweißstroms auch die dynamisch-mechanischen Maschineneigenschaften, wozu wesentlich auch das Nachsetzverhalten der Elektrodenzustelleinrichtung beiträgt. Das dynamisch-mechanische Verhalten der Zustelleinrichtung der bekannten Widerstandsschweißvorrichtung ist insbesondere auch durch mit zu bewegende Schweißstromkabel beeinflußt, die von der Schweißstromquelle von außen her direkt zu den Elektroden geführt sind. Das an der Elektrode zugeordnete angeschlossene Schweißstromkabel muß bei deren Zustellung stets mit bewegt werden. Da Schweißstromkabel bei der freien Außenverlegung relativ lang sind und relativ große Leitungsquerschnitte aufweisen müssen, um hohe Stromstärken leiten zu können, haben sie eine relativ große zu bewegende Masse. Dies kann sich in einer zureichenden Reproduzierbarkeit der Schweißergebnisse wiederspiegeln, was insbesondere bei der Massenproduktion von elektrischen Kontakten, insbesondere von Miniaturkontakten, nachteilig ist.

Die DE 10 2019 115 554 A1 beschreibt eine Bearbeitungsvorrichtung zur Laserbearbeitung eines Werkstücks, die einen Laser-Bearbeitungskopf nutzt, der einen Bearbeitungslaserstrahl auf das Werkstück führt. Es ist dabei vorgesehen, dass die Laserbearbeitungsvorrichtung möglichst autonom und selbständig agieren soll und somit ohne oder mit möglichst wenig Bedienpersonal in der Produktion eingesetzt werden kann. In solchen Fällen wird eine Prozessüberwachung mit einer Regelung eingesetzt, welche unerwünschtes Prozessverhalten bei der Laserbearbeitung autonom erkennt und idealerweise korrigieren kann. Eine mit dem Bearbeitungslaserstrahl koaxiale Kamerabeobachtung der Bearbeitungszone des Werkstücks stellt ein Beispiel einer derartigen Prozessbeobachtung dar. Hierbei wird ein Bearbeitungslaserstrahl mit einem Spektralbereich, der eine Wellenlänge von 1070 nm beinhaltet, verwendet. Alternativ können Diodendirektlaser (Wellenlänge typisch 940 bis 980 nm) und weitere Festkörperlaser (Wellenlänge typisch 1030 bis 1080 nm) eingesetzt werden. Eine Detektoreinrichtung erfasst die vom Werkstück reflektierte Laserstrahlung. Der Nachteil der bekannten Vorrichtung ist, dass sie nur unzureichende Ergebnisse liefert, was die Überwachung der Schweißqualität der mit dem bekannten Laserschweißkopf hergestellten Verschweißung betrifft.

Die DE 10 2020 104 462 A1 (offenbarend den Oberbegriff des Anspruchs 1) beschreibt eine Laser-Schweißvorrichtung, bei der vorgesehen ist, dass die Laser-Schweißvorrichtung Sensoren aufweist, mittels derer das reflektierte Laserlicht im Bereich der Prozessstrahlung, im infraroten Bereich und im Bereich des sichtbaren Lichts erfasst und analysiert wird.

Die aus der WO 2022/004610 A1 hervorgegangene EP 4 173 749 A1 beschreibt eine Laser-Vorrichtung, bei der vorgesehen ist, dass ein Laser-Schweißkopf derart ausgebildet ist, dass er einen zweidimensionalen Scan des zu bearbeitenden Werkstücks durchführen kann. Hierzu sind drei optische Sensoren vorgesehen, die am Laser-Schweißkopf angeordnet sind.

Die EP 2 489 459 A1 beschreibt ein Verfahren zum Verschweißen von Bauteilen mittels eines Laserstrahls, bei der der Laserstrahl entlang einer Fügezone der Bauteile entlang bewegt wird, wobei das Material der insbesondere aus metallischem Werkstoff bestehenden Bauteile im Bereich der Fügezone aufgeschmolzen wird. Diese Schmelze erstarrt in einem Nachlaufbereich des Laserstrahls in einem Abstand zum Laserstrahl zu einer Schweißnaht, wobei die Schmelze im Nachlaufbereich des Laserstrahls zumindest mittelbar mittels einer Wärmequelle erwärmt wird.

Die EP 0 593 894 B1 beschreibt ein Werkzeug für eine Stanzpresse mit einer Laser-Schweißanlage. Die Stanzpresse weist einen Rahmen auf, in welchem eine Exzenterwelle in Lagern drehbar gelagert ist. Auf dieser angetriebenen Exzenterwelle sind zwei Pleuelstangen gelagert, die mit ihrem unteren Ende mit einem Stößel, der ein Oberwerkzeug trägt, gelenkig verbunden sind. Der Rahmen der Stanzpresse trägt ein Unterwerkzeug. Bei der bekannten Stanzpresse ist im Oberwerkzeug ein Stempel eingesetzt, der mit einer im Unterwerkzeug vorhandenen Matrize zusammenwirkt, um aus einem Blechband Blechteile auszustanzen, welche im Unterwerkzeug zu jeweiligen Blechpaketen vereinigt werden. Mit dem Rahmen ist eine Laserstrahlquelle verbunden, die über optische Leiter mit einer Fokussiereinrichtung in Verbindung steht, die auf dem Unterwerkzeug angeordnet ist. Im Betrieb rotiert die Exzenterwelle und bewirkt über die Pleuelstangen eine Stanzbewegung des Stößels mit dem Oberwerkzeug zur Herstellung der einzelnen Blechteile. Mit der Matrize wird bei jedem Arbeitshub des Stößels ein weiteres Blechteil auf ein sich dort befindliches Blechteil abgelegt. Sobald sich der Stempel beim Aufwärtshub eine kleine Strecke von der Matrize entfernt hat, wird durch die Laser-Schweißanlage ein Laserstrahl von äußerst kurzer Dauer gegen eine Berührungsstelle zwischen dem abgelegten Blech und dem sich darüber befindlichen Blechteil abgegeben, um die beiden Blechteile miteinander zu verschweißen. Da sich eine Schnittkante der Matrize und/oder des Stempels im Betrieb abnützt, muss die entsprechende Arbeitsfläche periodisch abgeschliffen werden, um die Schnittkante der Matrize nachzuschärfen. Daraus ergibt sich, dass die jeweilige Schweißstelle in der Matrize einer relativen Ortsveränderung unterworfen wird, so dass grundsätzlich eine neue Einstellung mindestens der Fokussiereinrichtung der Laser-Schweißanlage notwendig wird. Die Fokussiereinrichtung weist eine vorgegebene Brennweite und einen vorgegebenen Fokussierpunkt auf, der die Schweißstelle zweier Blechteile bestimmt. Sie ist dazu auf einem Tragblock eingesetzt und weist einen Punkt auf, über welchen sie an einer Seite des Tragblocks anliegt. Diese als Führungsfläche für die Fokussiereinrichtung wirkende Seite des Tragblocks verläuft genau senkrecht zur optischen Achse der Fokussiereinrichtung und der Tragblock ist derart genau bearbeitet und an einer Stelle angeordnet, die einen derart genauen Abstand von der Schweißstelle hat und mit derart genauen Verbindungsmitteln mit dem Körper des Unterwerkzeugs verbunden ist, dass durch die Optik der Fokussiereinrichtung eine bestimmte Schweißstelle genau eingehalten ist. Der Tragblock ist ein klammerförmiges Bauteil, welches zwei Wangen aufweist, welche ein Durchgangsloch zur tragenden Aufnahme der Fokussiereinrichtung umgeben. Oben sind die beiden Wangen durch einen Schlitz voneinander getrennt und durch einen Schraubbolzen miteinander verbunden. Durch das Anziehen des Schraubbolzens wird die Fokussiereinrichtung im Tragblock festgeklemmt. Die Arbeitsfläche des Körpers des Unterwerkzeugs wirkt als Positionierfläche für den Tragblock, und diese Positionierfläche fluchtet mit der Schnittkante der Matrize, die im Körper des Unterwerkzeugs eingesetzt ist. Die untere Seite des Tragblocks, über welche dieser auf der Arbeitsfläche des Körpers des Unterwerkzeugs ruht, wirkt als Führungsfläche, welche mindestens eine Höhenstellung der im Tragblock eingesetzten Fokussiereinrichtung festlegt. Der Ort und die Stellung der Fokussiereinrichtung im Tragblock bestimmt unter anderem die Schweißstelle bei der Matrize. Der horizontale Abstand des Tragblocks von der Schweißstelle und somit insbesondere der Seite des Tragblocks ist durch zwei Positionierstifte festgelegt, die in Bohrungen im Tragblock und im Körper des Unterwerkzeugs eingesetzt sind. Der Tragblock selbst ist mittels einem Schraubbolzen mit dem Körper des Unterwerkzeugs verbunden. Die Positionierstifte sind mit ihren Längsmittelachsen und der Schraubbolzen mit seiner Längsmittelachse miteinander in Linie ausgerichtet, d. h. sie bestimmen eine Ebene, in welcher die optische Achse der Fokussiereinrichtung enthalten ist. Nach den Angaben der vorgenannten Druckschrift kann dadurch der Tragblock äußerst schmal gebaut werden, so dass es möglich ist, auf einem eng begrenzten Raum mehrere, auf dieselbe Matrize wirkende Fokussiereinrichtungen der Laser-Schweißanlage zu montieren, so dass jeweils zwei Blechteile im Blechpaket an mehreren Stellen gleichzeitig miteinander verschweißt werden können. Wenn das Nachschärfen der Schnittkante der Matrize durchgeführt werden muss, wird das Unterwerkzeug ausgebaut und, bei schon entfernter Fokussiereinrichtung, der Tragblock durch Lösen des Schraubbolzens vom Körper des Unterwerkzeugs entfernt. Danach kann nun die Arbeitsfläche in bekannter Art und Weise abgeschliffen werden, um die verschiedenen Schnittkanten nachzuschärfen. Entscheidend dabei ist, dass beim Abschleifen nicht nur der Bereich des Körpers des Unterwerkzeugs, sondern gleichzeitig und in demselben Maß auch der Bereich der Positionierfläche des Körpers des Unterwerkzeugs, die die Höhenstellung des Tragblocks und folglich der Fokussiereinrichtung bestimmt, abgeschliffen wird. Damit kann nach der genannten Bearbeitung der Tragblock ohne Weiteres wieder mit dem Körper des Unterwerkzeugs verbunden werden und die Fokussiereinrichtung kann wieder montiert werden. Eine zeitraubende und aufwendige Neuausrichtung insbesondere des Tragblocks auf die Schweißstelle, die sich relativ nicht zur Positionierfläche verschoben hat, soll somit wegfallen.

Die aus der vorgenannten Druckschrift bekannte Stanzpresse mit einer Laser-Schweißanlage erlaubt es zwar, innerhalb einer einzigen Vorrichtung ein Blechteil zu stanzen und mit einem weiteren Blechteil zu verschweißen. Nachteilig ist aber, dass eine Anpassung der Laser-Schweißanlage auf geänderte Einsatzbedingungen, die eine Neuausrichtung des Laserstrahls erforderlich machen, äußerst schwierig ist.

Die DE 10 2016 203 511 A1 beschreibt eine Widerstandsschweißvorrichtung, die zwei einander gegenüberliegend angeordnete Schweißelektroden zum Schweißen von Schweißgut aufweist, das zwischen den Elektroden angeordnet ist. Es ist vorgesehen, dass zumindest eine erste der beiden Schweißelektroden mittels einer Zustelleinrichtung relativ zu der anderen Elektrode aus einer Elektrodendistanzstellung in eine Schweißstellung bewegbar ist, um das Schweißgut zwischen den beiden Elektroden zu verschweißen. Die Zustelleinrichtung weist hierbei einen Elektromotor zur Bewegung der ersten Schweißelektrode auf, wobei vorgesehen ist, dass der Elektromotor ein Linearmotor mit einem Stator und einem längs einer Linearbewegungsachse linear bewegbar geführten Läufer ist und dass der Läufer die erste Elektrode aufweist.

Es ist daher Aufgabe der Erfindung, Maßnahmen vorzuschlagen, um das eingangs beschriebene Widerstandsschweißen zu ersetzen.

Diese Aufgabe wird erfindungsgemäß (siehe Anspruch 1) dadurch gelöst, dass im Gehäuse eine Strahlaufbereitungseinheit mit einem Eintrittsbereich und einem Austrittsbereich angeordnet ist, wobei ein aus dem Faserende der mindestens einen Lichtleitfaser austretender mindestens einer Laserstrahl zum Eintrittsbereich der Strahlaufbereitungseinheit geleitet ist und aus dem Austrittsbereich der Strahlaufbereitungseinheit mindestens ein Laserstrahl austritt, der durch eine Austrittsöffnung aus dem Gehäuse des Laser-Schweißkopfs geführt wird, und dass der Abstand zwischen dem Faserende der mindestens einen Lichtleitfaser und dem Eintrittsbereich der Strahlaufbereitungseinheit veränderbar ist, und dass ein Endbereich mindestens einer Lichtleitfaser in einer axialen Richtung verschiebbar im Gehäuse des Laser-Schweißkopfs angeordnet ist.

Erfindungsgemäß wird eine Laserschweißvorrichtung verwendet, welche es in vorteilhafter Art und Weise erlaubt, das bis jetzt zum Verschweißen eines derartigen Schweißguts eingesetzte Widerstandsschweißen durch ein Laser-Schweißen zu ersetzen. Durch die erfindungsgemäßen Maßnahmen wird in vorteilhafter Art und Weise erreicht, dass die Verschweißung zweier Werkstücke, insbesondere eines band- oder streifenförmigen Werkstücks mit einem dünnen zweiten Werkstück, wie z. B. einem metallischen Draht, mittels eines Laserschweißvorgangs durchgeführt werden kann. Eine derartige Maßnahme besitzt den Vorteil, dass das Laserverschweißen der beiden Werkstücke mit einer hohen Taktrate durchgeführt werden kann. Außerdem erfolgt der Verschweißvorgang - insbesondere im Vergleich zu einem Widerstandsschweißen - relativ verschmutzungsfrei und mit wenig Verschleiß. Desweiteren besitzen die erfindungsgemäßen Maßnahmen den Vorteil, dass keine Beschädigung der Kontaktoberfläche auftritt, da die zum Verschweißen zweier Werkstücke, insbesondere zweier elektrischer Kontakte, benötige Schweißenergie einseitig eingetragen wird. Die Erfindung sieht vor, dass - was von selbständig patentbegründender Bedeutung ist - die erfindungsgemäße Schweissvorrichtung eine Überwachungseinrichtung zur Detektion einer während der Laserbeaufschlagung einer Schweißstelle emittierten Strahlung besitzt. Eine derartige Maßnahme besitzt den Vorteil, dass hierdurch in einfacher Art und Weise - vorzugsweise fortlaufend - die Qualität der Schweißstelle, welche von dem mindestens einen aus dem erfindungsgemäßen Laser-Schweißkopf austretenden Laserstrahl hergestellt wird, überprüft und/oder der mindestens eine Laserstrahl geregelt werden kann.

Bei den erfindungsgemäßen Maßnahmen wird in vorteilhafter Art und Weise eine Schweißvorrichtung verwendet, welche sich dadurch auszeichnet, dass durch die Erfassung und Auswertung des vom Werkstück reflektierten Lichts im Bereich der Prozessstrahlung, also des verwendeten Laserlichts sowie im Bereich des sichtbaren Lichts, vorzugsweise im Bereich zwischen 400 und 850 nm, und/oder im Infrarotbereich, vorzugsweise im Bereich zwischen 1200 und 1700 nm, verbesserte Aussagen über die Schweißqualität der mit der erfindungsgemäßen Schweißvorrichtung gefertigten Schweißsielle machbar sind. Eine derartige Maßnahme besitzt den Vorteil, dass hierdurch in einfacher Art und Weise - vorzugsweise fortlaufend - die Qualität der Schweißstelle, welche von dem mindestens einen aus dem erfindungsgemäßen Laser-Schweißkopf austretenden Laserstrahl hergestellt wird, überprüft und/oder der mindestens eine Laserstrahl geregelt werden kann.

Eine vorteilhafte Weiterbildung der Erfindung sieht vor, dass von der Überwachungseinrichtung der erfindungsgemäßen Laser-Schweißvorrichtung reflektierte Strahlung im Infrarotbereich, insbesondere im mittleren Infrarotbereich, hierbei insbesondere in einem Wellenlängen-Bereich zwischen 1200 und 1700 nm, oder in einem oder in mehreren Teilbereichen davon erfasst und ausgewertet wird. Je höher die Anteile der reflektierten infraroten Strahlung ist, desto größer sind normalerweise die Schweißpunkte.

Eine weitere vorteilhafte Weiterbildung der Erfindung sieht vor, dass die Überwachungseinrichtung die reflektierte Strahlung außer im Bereich der Wellenlänge des vom Laser-Schweißkopf emittierten Laserlichts auch in einem Bereich des sichtbaren Lichts, vorzugsweise in einem Bereich zwischen 400 und 850 nm, oder in einem oder in mehreren Teilbereichen des sichtbaren Bereichs erfasst und auswertet. Eine derartige Maßnahme besitzt den Vorteil, dass durch die Erfassung der reflektierten Strahlung in einem Bereich des sichtbaren Lichts in einfacher Art und Weise die Temperatur der Schweißstelle ermittelt werden kann. Dies erlaubt es, bei einer zu hohen Temperatur, insbesondere bei einer Temperatur oberhalb des Schmelzpunkts des aufgeschmolzenen Materials, die Leistung der Laserstrahlung zu verändern, insbesondere zu reduzieren, um insbesondere einer Porosität der Schweißstelle entgegenzuwirken.

Eine weitere vorteilhafte Weiterbildung der Erfindung - welche von eigenständiger patentbegründender Bedeutung ist - sieht vor, dass die Strahlaufbereitungseinheit als eine galvanometrische Strahlaufbereitungseinheit, insbesondere als ein Galvanometerscanner ausgebildet ist. Eine derartige Maßnahme besitzt den Vorteil, dass hierdurch in besonders einfacher Art und Weise eine flexible Adaption mindestens eines Laserstrahls an die von der erfindungsgemäßen Schweissvorrichtung durchgeführten Bearbeitungsvorgänge ermöglich ist.

Eine weitere vorteilhafte Weiterbildung der Erfindung - welche wiederum von selbständig patentbegründender Bedeutung ist - sieht vor, dass der Abstand zwischen dem Faserende der Lichtleitfaser und dem Eintrittsbereich der Strahlaufbereitungseinheit des Laser-Schweißkopfs veränderbar ist. Durch diese erfindungsgemäßen Maßnahmen wird in vorteilhafter Art und Weise ein kompakt bauender Laser-Schweißkopf für eine Laser-Schweißvorrichtung geschaffen, welcher eine einfache Anpassung der Fokuslage und/oder des Fokusdurchmessers mindestens eines Laserstrahls ermöglicht.

Eine weitere vorteilhafte Weiterbildung der Erfindung sieht vor, dass der in der erfindungsgemäßen Schweißvorrichtung verwendete Laser-Schweißkopf ein Gehäuse besitzt, in welchem mindestens eine Lichtleitfaser mündet, durch welche dem Laser-Schweißkopf ein von einer externen Strahlungsquelle erzeugter Laserstrahl zuführbar ist, dass im Gehäuse eine Strahlaufbereitungseinheit mit einem Eintrittsbereich und einem Austrittsbereich angeordnet ist, wobei ein aus dem Faserende der mindestens einen Lichtleitfaser austretender mindestens eine Laserstrahl zum Eintrittsbereich der Strahlaufbereitungseinheit geleitet ist und aus dem Austrittsbereich der Strahlaufbereitungseinheit mindestens ein Laserstrahl austritt, der durch eine Austrittsöffnung aus dem Gehäuse des Laser-Schweißkopfs geführt wird, und dass der Abstand zwischen dem Faserende der mindestens einen Lichtleitfaser und dem Eintrittsbereich der Strahlaufbereitungseinheit veränderbar ist. Es ist also vorgesehen, dass die oder mindestens eine der Lichtleitfasern, über die dem Laser-Schweißkopf das von einer externen Strahlungsquelle erzeugte Laserlicht zuführbar ist, und/oder die Strahlaufbereitungseinheit im Gehäuse beweglich, insbesondere verschiebbar, aufgenommen sind. Diese Maßnahme besitzt den Vorteil, dass durch eine einfach durchzuführende Änderung des Relativabstandes zwischen dem Faserende der Lichtleitfaser und dem Eintrittsbereich der Strahlaufbereitungseinheit die Fokuslage und/oder der Fokusdurchmesser mindestens eines aus dem erfindungsgemäßen Laser-Schweißkopf austretenden Laserstrahls verändert werden kann. Bevorzugt wird, dass insbesondere die oder mindestens eine der in das Gehäuse des erfindungsgemäßen Laser-Schweißkopfs mündenden Lichtleitfasern verschiebbar in diesem angeordnet ist, während die Strahlaufbereitungseinheit unverschiebbar im Gehäuse angeordnet ist. Eine derartige Maßnahme besitzt den Vorteil eines besonders einfachen geometrisch-konstruktiven Aufbaus, so dass ein derartig ausgebildeter Laser-Schweißkopf in vorteilhafter Art und Weise kompakt baut.

Eine weitere vorteilhafte Weiterbildung der Erfindung sieht vor, dass dem Gehäuse des erfindungsgemäßen Laser-Schweißkopfs zwei oder mehr Lichtleitfasern zugeführt sind, und dass der Relativabstand zwischen der Strahlaufbereitungseinheit und mindestens zwei der in das Gehäuse mündenden Lichtleitfasern, insbesondere durch ein Verschieben dieser Lichtleitfasern, veränderbar ist. Bevorzugt wird, dass jede der mindestens zwei Lichtleitfasern unabhängig von der anderen Lichtleitfaser verschiebbar ist. Diese Maßnahme besitzt den Vorteil, dass hierdurch in einfacher Art und Weise die Fokuslage und/oder der Fokusdurchmesser mindestens zweier aus dem erfindungsgemäßen Laser-Schweißkopf austretenden Laserstrahlen in einfacher Art und Weise verändert werden kann. Ein weiterer Vorteil der Verwendung von zwei oder mehreren Lichtleitfasern zur Zuführung des Laserlichts besitzt den Vorteil, dass hierdurch die Auslösung der aus den einzelnen Faserenden austretenden Laserimpulse zeitlich gesteuert werden kann.

Eine weitere vorteilhafte Weiterbildung der Erfindung sieht vor, dass der Laser-Schweißkopf mindestens eine Spanneinheit mit einer Spannhülse und einem Spannring aufweist, durch welche die mindestens Lichtleitfasern im Laser-Schweißkopf in mindestens zwei Positionen lagefixierbar ist. Eine derartige Maßnahme besitzt den Vorteil, dass die Relativposition zwischen Strahlaufbereitungseinheit und dem Faserende leicht veränderbar ist.

Eine weitere vorteilhafte Weiterbildung der Erfindung sieht vor, dass die Strahlaufbereitungseinheit als ein Galvanometerscanner ausgebildet ist. Eine derartige Maßnahme besitzt den Vorteil, dass hierdurch in besonders einfacher Art und Weise eine flexible Adaption mindestens eines Laserstrahls an die für einen vom erfindungsgemäßen Laser-Schweißkopf durchgeführten Bearbeitungsvorgänge ermöglich ist.

Eine weitere vorteilhafte Weiterbildung der Erfindung sieht vor, dass der Laser-Schweißkopf ein Innenrohr aufweist, welches im Gehäuse drehbar angeordnet ist und die Strahlaufbereitungseinheit aufnimmt. Durch ein Drehen des Innenrohrs und somit der in ihr aufgenommenen Strahlaufbereitungseinheit kann eine Schwenkbewegung des oder der aus dem Gehäuse austretenden Laserstrahlen erzielt werden.

Eine weitere vorteilhafte Weiterbildung der Erfindung sieht vor, dass der Laser-Schweißkopf eine Kühleinrichtung aufweist, durch welche aus seinem Gehäuse Wärme abführbar ist. Gemäß einer bevorzugten Ausgestaltung dieser Kühleinrichtung ist vorgesehen, dass in einer das Innenrohr aufnehmenden Halterung ein Kühlkanal vorgesehen ist, welcher das Innenrohr zumindest über einen Teil seines Umfangsbereichs umschließt.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, welches im Folgenden anhand der Figuren beschrieben wird. Es zeigen:
- Figur 1: schematische Darstellung einer Schweißvorrichtung,
- Figur 2: eine vergrößerte Darstellung des Schweißbereichs der Schweißvorrichtung der Figur 1,
- Figur 3: eine perspektivische Darstellung eines ersten Laser-Schweißkopfs,
- Figur 4: eine Draufsicht auf die erste Ausführungsform der Figur 3,
- Figur 5: einen Schnitt entlang der Linie A-A der Figur 3,
- Figur 6: einen Schnitt entlang der Linie B-B der Figur 3,
- Figur 7: eine perspektivische Darstellung eines zweiten Laser-Schweißkopfs,
- Figur 8: eine Draufsicht auf die zweite Ausführungsform der Figur 7, und
- Figur 9: einen Schnitt entlang der Linie C-C der Figur 8.

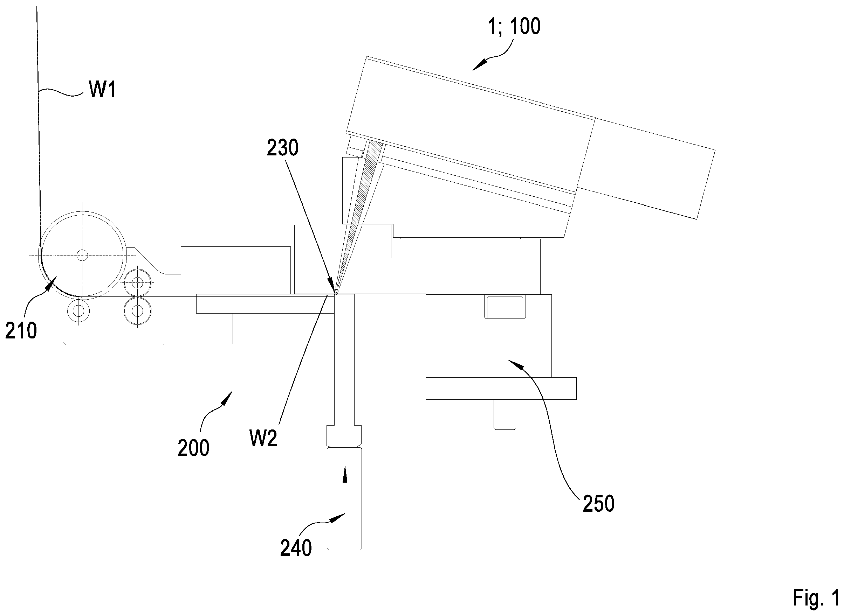

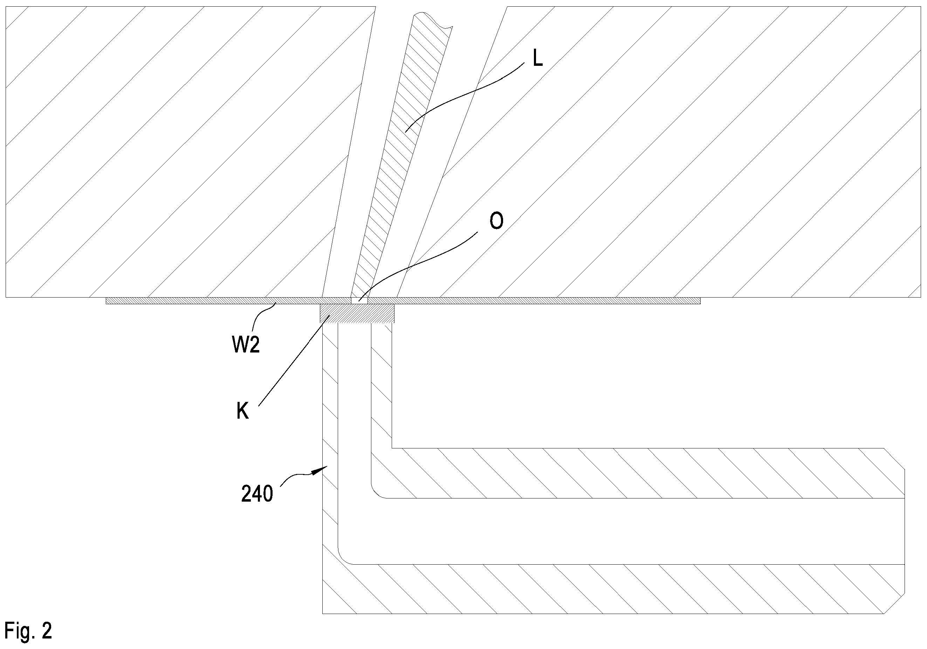

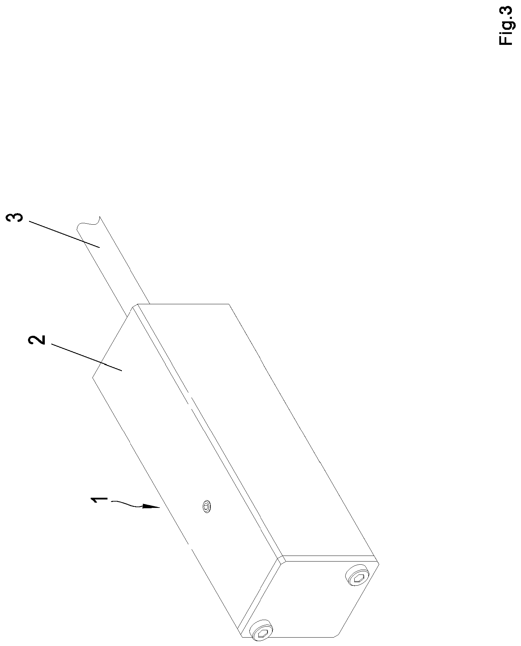

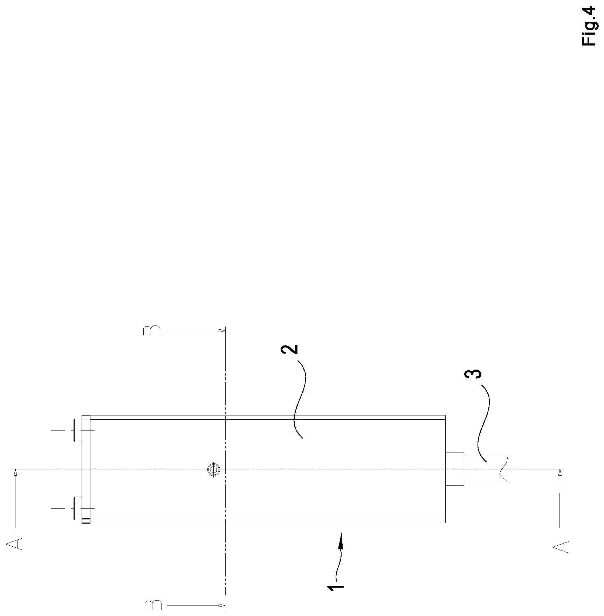

In den Figuren 1 und 2 ist eine mit 200 bezeichneten Schweißvorrichtung zum Verschweißen zweier Werkstücke W1 und W2 unter Verwendung eines Laser-Schweißkopfs 1 dargestellt. Die Figuren 3 bis 6 zeigen einen ersten Laser-Schweißkopf 1 und die Figu-ren 7 bis 9 einen zweiten Laser-Schweißkopf 100.

In Figur 1 ist nun schematisch der Aufbau der Schweißvorrichtung 200 dargestellt. Diese weist eine erste Zuführeinrichtung 210 auf, mittels derer ein erstes Werkstück W1, hier ein Metalldraht, insbesondere ein Silberdraht, der Vorrichtung 200 vorzugsweise intermittierend zuführbar ist. Diese besitzt des Weiteren eine zweite Zuführeinrichtung (in den Figuren nicht gezeigt), mittels derer ein zweites Werkstück W2, insbesondere ein Metallstreifen, zuführbar ist. Die beiden Werkstücke W1 und W2 sind am besten aus der Figur 2 zu ersehen. Des Weiteren besitzt die Schweißvorrichtung 200 noch einen Laser-Schweißkopf 1 bzw. 100, welcher jeweils noch nachstehend im Detail beschrieben wird. Die Schweißvorrichtung 200 weist des Weiteren eine Trenneinrichtung 230 auf, mittels derer sukzessive Werkstück-Stücke, insbesondere Miniatur-Kontaktelemente K, vom ersten Werkstück W1 abgetrennt werden können. Diese werden dann - wie am besten aus Figur 2 ersichtlich ist - von einer Positioniereinrichtung 240 an einer Schweißposition S (siehe dazu Figur 2) auf dem zweiten Werkstück W2 positioniert. Ein aus dem Laser-Schweißkopf 1 bzw. 100 ausgehender Laserstrahl L beaufschlagt die beiden Werkstücke W1, W2 an der Schweißstelle S. Im hier beschriebenen Fall der Herstellung von Kontaktelementen, insbesondere von Miniatur-Kontaktelementen K mittels eines Laserverschweißens wird bevorzugt, dass die Laserbeaufschlagung von der dem durch die Positioniereinrichtung 240 an der Schweißposition S positionierten Kontaktelement K gegenüberliegenden Seite des zweiten Werkstücks W2 erfolgt. Eine derartige Maßnahme besitzt den Vorteil, dass hierdurch eine auf dem Kontaktelement K vorhandene Oberflächenbeschichtung nicht zerstört oder wenigstens nicht erheblich geschädigt wird. Es kann vorgesehen sein, dass das zweite Werkstück W2 an dieser Position eine Öffnung O aufweist, durch welche der Laserstrahl L direkt durch das Werkstück W2 hindurch das erste Werkstück W1 und insbesondere das Kontaktelement K beaufschlagen kann. Dem Fachmann ist aber aus nachfolgender Beschreibung ersichtlich, dass die beiden vorgenannten Maßnahmen - Beaufschlagung von der dem Kontaktelement K gegenüberliegenden Seite und Vorsehen einer Öffnung O - nicht zwingend sind.

Die Figur 1 zeigt des Weiteren noch eine Halterung 250 für den Laser-Schweißkopf 1 bzw. 100, welche aber für das weitere Verständnis der Schweißvorrichtung 200 nicht von Bedeutung ist und daher nicht näher beschrieben wird.

Die bei der Schweißvorrichtung 200 verwendeten Laser-Schweißköpfe 1 bzw. 100 sind grundsätzlich bekannt und werden daher im Folgenden nur soweit beschrieben, als dies für das Verständnis ihres Aufbaus und ihrer Funktionsweise erforderlich ist.

Der Laser-Schweißkopf 1 weist ein Gehäuse 2 auf, in welches mindestens eine Lichtleitfaser 3 mündet, über die dem Laser-Schweißkopf 1 ein von einer nicht-gezeigten Strahlungsquelle erzeugter Laserstrahl zuführbar ist. In den Figuren ist nur eine einzige Lichtleitfaser 3 dargestellt. Dem Fachmann ist aber aus nachfolgender Beschreibung ersichtlich, dass es auch möglich ist, dem Gehäuse 2 des Laser-Schweißkopfs 1 mehr als zwei Lichtleitfasern zuzuführen, aus deren Faserenden jeweils mindestens ein Laserstrahl L austritt. Der einfacheren Darstellung und Erläuterung halber wird aber bei der nachfolgenden Beschreibung der Figuren davon ausgegangen, dass dem Laser-Schweißkopf 1 nur eine einzige Lichtleitfaser 3 zugeführt ist. Der aus der Lichtleitfaser 3 austretende Laserstrahl L gelangt zu einer Strahlaufbereitungseinheit 5, in welcher er in zwei Laserstrahlen L1, L2 gespalten und entsprechend aufbereitet wird. Die beiden Laserstrahlen L1, L2 gelangen dann zu einem Umlenkspiegel 6 und treten durch eine Öffnung 7 aus dem Gehäuse 2 des Laser-Schweißkopfs 1 aus. In der Öffnung 7 ist ein Schutzglas 8 vorgesehen.

Die Strahlaufbereitungseinheit 5 dient dazu, den ihr über die mindestens eine Lichtleitfaser 3 zugeführten Laserstrahl aufzubereiten, insbesondere in eine Anzahl von n Teilstrahlen aufzuspalten, z. B. in n = 2 Teilstrahlen bei einem bifokalen Laser-Schweißkopf 1. Dem Fachmann ist aus nachfolgender Beschreibung ersichtlich, dass der vorgenannte Fall eines bifokalen Laser-Schweißkopfs nur exemplarischen Charakter besitzt. Es ist natürlich auch möglich, den Laser-Schweißkopf 1 als einen monofokalen Laser-Schweißkopf (n = 1) oder als einen bifokalen bzw. multifokalen Laser-Schweißkopf 1, aus dessen Öffnung 7 zwei bzw. mehr als zwei Laserstrahlen austreten, auszubilden. Um dies zu erreichen, weist die Strahlaufbereitungseinheit 5 eine entsprechende Anzahl von optischen Elementen, insbesondere Linsen, Strahlteiler, etc. auf. Es kann vorgesehen sein, dass die Strahlaufbereitungseinheit 5 auswechselbar im Gehäuse 2 des Laser-Schweißkopfs 1 angeordnet ist. Eine derartige Maßnahme besitzt den Vorteil, dass ein rasches Umrüsten des Laser-Schweißkopfs 1, z. B. von einem monofokalen auf einen bifokalen oder multifokalen Laser-Schweißkopf (oder umgekehrt) möglich ist. Es ist natürlich auch möglich, anstelle eines Austausches der im Gehäuse 2 aufgenommenen Strahlaufbereitungseinheit 5 diese entsprechend zu modifizieren, z. B. durch den Austausch eines Linsenpakets gegen ein anderes Linsenpaket und/oder durch Hinzufügen oder Wegnehmen eines oder mehrerer Linsenelemente.

Es wird bevorzugt, dass die Strahlaufbereitungseinheit 5 als eine galvanometrische Strahlaufbereitungseinheit, insbesondere als Galvanometerscanner, ausgeführt ist. Eine derartige Maßnahme besitzt den Vorteil, dass hierdurch in einfacher Art und Weise die Fokuslage und/oder der Fokusdurchmesser eines oder mehrerer Laserstrahlen verändert werden kann.

Um nun einen derartigen Laser-Schweißkopf 1 in einem Werkzeug einer Werkzeugmaschine, insbesondere eines Werkzeugs, welches ein gleichzeitiges Stanzen und Schweißen von Werkstückteilen erlaubt, verwenden zu können, ist es erforderlich, dass die Fokuslage des oder der aus dem Laser-Schweißkopf 1 austretenden Laserstrahlen auf eine oder mehrere zur schweißenden Bearbeitung des Werkstücks erforderlichen Schweißstellen auszurichten. Dies muss insbesondere hinsichtlich ihres Fokuslage und ihres Fokusdurchmessers, also des Durchmessers des an der Schweißstelle auf das Werkstück auftretenden Laserstrahls L1 bzw. L2, geschehen.

Um dies einfach durchführen zu können, ist beim beschriebenen Laser-Schweißkopf 1 vorgesehen, dass die Lichtleitfaser 3 beweglich im Laser-Schweißkopf 1 aufgenommen ist, insbesondere in einer axialen Richtung relativ zur Strahlaufbereitungseinheit 5 verschiebbar ist. Die Änderung des Abstands zwischen einem Faserende 3a der Lichtleitfaser 3 und einem vorderen Eintrittsbereich 5a der Strahlaufbereitungseinheit 5 bewirkt eine Änderung der Fokuslage des oder der aus einem Austrittsbereich 5b der Strahlaufbereitungseinheit 5 austretenden Laserstrahlen.

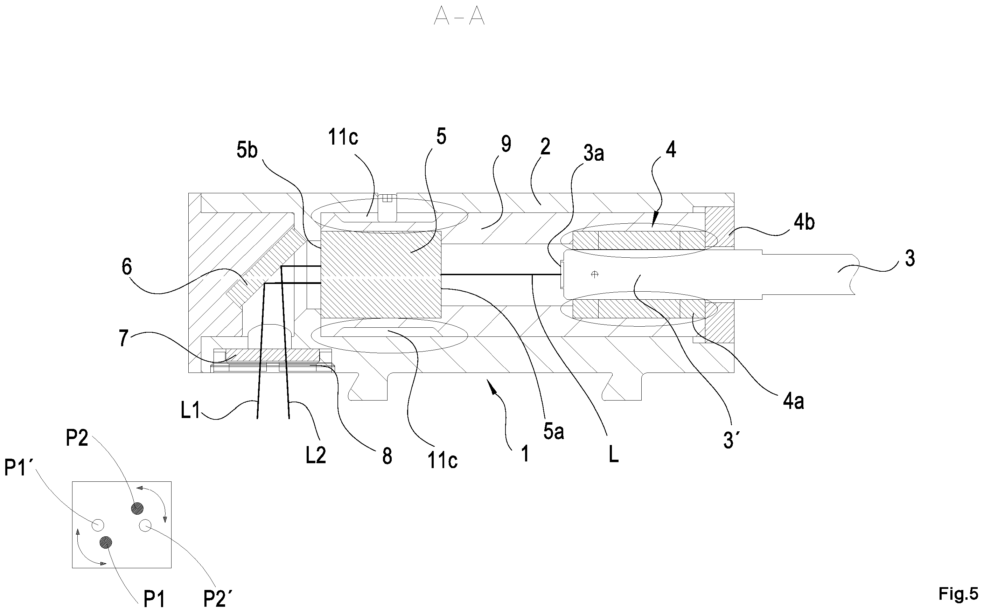

Um dies beim beschriebenen Ausführungsform des Laser-Schweißkopfs 1 in einfacher Art und Weise zu ermöglichen, ist vorgesehen, dass - wie am besten aus Figur 5 ersichtlich ist - die Lichtleitfaser 3 in einer Spanneinheit 4 verschiebbar aufgenommen ist. Die Spanneinheit 4 weist eine Spannhülse 4a auf, welche mit einem Spannring 4b zusammenwirkt. Durch ein Zudrehen des Spannrings 4b wird die Lichtleitfaser 3 in der Spannhülse 4a geklemmt und derart im Gehäuse 2 des Laser-Schweißkopfs 1 in einer bestimmten Lage fixiert. Durch ein Aufdrehen des Spannrings 4b wird diese Klemmung aufgehoben, so dass die Lichtleitfaser 3 zur Änderung des Abstands zwischen Faserende 3a und Eintrittsbereich 5b der Strahlaufbereitungseinheit 5 bewegt werden kann. Nachdem die Lichtleitfaser 3 in ihrer gewünschten neuen Lage positioniert wurde, wird der Spannring 4b wieder zugedreht, so dass die Lichtleitfaser 3 in dieser Position lagefixiert im Gehäuse 2 aufgenommen ist.

Dem Fachmann ist aber ersichtlich, dass die Änderung des Relativabstands zwischen Faserende 3a und Eintrittsbereich 5b auf eine andere Art und Weise als die vorstehend beschriebene Konstruktion erreicht werden kann. Zum Beispiel ist es möglich, den vorderen Endbereich 3' der Lichtleitfaser 3 auf einem im Gehäuse 2 verschiebbaren Schlitten anzuordnen. Auch eine Kombination der beiden vorgenannten Maßnahmen - Spanneinheit 4 und verschiebbarer Schlitten - ist möglich.

Ebenso ist es denkbar, dass die Strahlaufbereitungseinheit 5 verschiebbar im Gehäuse 2 angeordnet ist, so dass durch ein Verschieben der Strahlaufbereitungseinheit 5 - bei feststehender Lichtleitfaser 3 - eine Änderung der Fokuslage und/oder des Fokusdurchmessers des oder der aus dem Gehäuse 2 austretenden Laserstrahlen erzielbar ist. Aber auch eine Kombination beider Maßnahmen - verschiebbare Strahlaufbereitungseinheit 5 und verschiebbare Lichtleitfaser 3 - ist möglich.

Dem Fachmann ist aus vorstehender Beschreibung ersichtlich, dass die dort aufgeführten Maßnahmen nur exemplarischen Charakter besitzen. Wesentlich ist, dass der Abstand zwischen dem Faserende 3a der Lichtleitfaser 3 und dem Eintrittsbereich 5a der Strahlaufbereitungseinheit 5 zur Anpassung der Fokuslage und/oder des Fokusdurchmessers des der Strahlaufbereitungseinheit 5 zugeführten Laserstrahls L veränderbar ist. Ob hierzu nur die Lichtleitfaser 3 oder nur die Strahlaufbereitungseinheit 5 im Gehäuse 2 des Laser-Schweißkopfs 1 bewegt werden, oder ob eine Bewegung dieser beiden vorgenannten Komponenten stattfindet, besitzt nur sekundären Charakter. Es wird aber bevorzugt, dass die Strahlaufbereitungseinheit 5 nicht bewegt wird und die Änderung des Relativabstands zwischen deren Eintrittsbereich 5a und dem Faserende 3a der Lichtleitfaser 3 durch eine Bewegung der Lichtleitfaser 3, insbesondere durch eine Verschiebung in axialer Richtung, erreicht wird.

Wie bereits vorstehend ausgeführt, ist der beschriebene Laser-Schweißkopf 1 nicht auf die Konstellation, dass dem Gehäuse 2 nur eine einzige Lichtleitfaser 3 zugeführt wird, beschränkt. Vielmehr ist es möglich, zwei oder mehr Lichtleitfasern 3 zu verwenden, um den Laser-Schweißkopf 1 das von einer externen Strahlungsquelle erzeugte Laserlicht zuzuführen. Es wird dann bevorzugt, dass nicht nur der Relativabstand zwischen dem Eintrittsbereich 5a der Strahlaufbereitungseinheit 5 und dem Faserende 3a der Lichtleitfaser 3 verändert werden kann, sondern dass eine derartige Maßnahme für mindestens eine weitere und vorzugsweise alle weiteren Lichtleitfasern durchführbar ist. Es wird dann wieder bevorzugt, dass mindestens eine der weiteren Lichtleitfasern beweglich, insbesondere in axialer Richtung verschiebbar, im Gehäuse 2 des Laser-Schweißkopfs 1 angeordnet sind, wie dies z. B. bei der Lichtleitfaser 3 beschrieben wurde.

Vorzugsweise ist vorgesehen, dass der oder die aus dem Laser-Schweißkopf 1 austretenden Laserstrahlen L1, L2 nicht nur hinsichtlich ihrer Fokuslage ausgerichtet sind, sondern dass auch die Winkelposition der Laserstrahlen veränderlich ist. Nachstehende Beschreibung geht von einem bifokalen Laser-Schweißkopf 1 aus. Dem Fachmann ist aber ersichtlich, dass dies die Allgemeinheit der nachfolgenden Ausführungen nicht einschränkt.

In der in der linken unteren Ecke befindlichen Funktionsskizze der Figur 5 sind schematisch zwei Laserstrahlen L1, L2 durch Kreise P1 und P2 dargestellt. Annahmegemäß repräsentieren die Kreise P1 und P2 die aus dem Laser-Schweißkopf 1 in seiner aktuellen Konfiguration austretenden Laserstrahlen L1, L2.

Um nun die Ausrichtung der Laserstrahlen L1 und L2 von den durch die Kreise P1 und P2 repräsentierten Positionen in hier durch die Kreise P1', P2' repräsentierte Positionen durchführen zu können, ist beim beschriebenen Laser-Schweißkopf 1 - wie am besten aus Figur 5 ersichtlich - vorgesehen, dass im Gehäuse 2 ein Innenrohr 9 drehbar gelagert ist. Die Strahlaufbereitungseinheit 5 ist im Innenrohr 9 angeordnet, so dass durch eine Rotation des Innenrohrs 9 auch die Strahlaufbereitungseinheit 5 rotiert wird, wodurch die vorstehend beschriebene Änderung der Winkelausrichtung der Laserstrahlen L1, L2 erzielt werden kann.

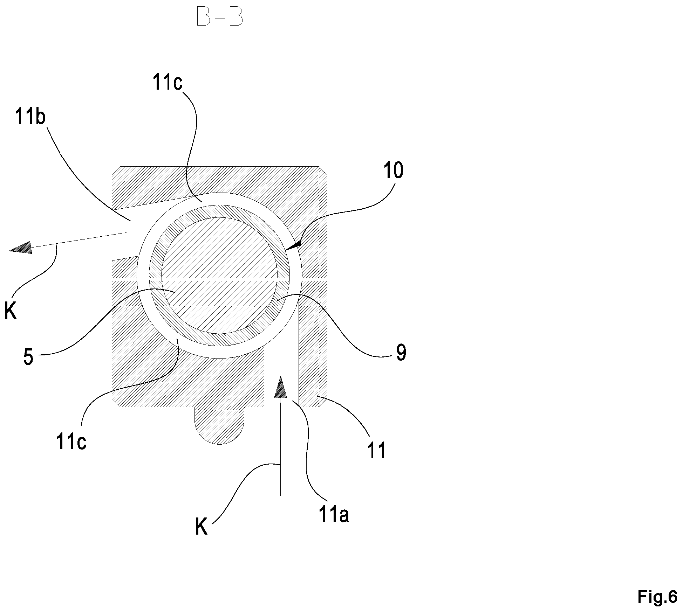

Eine weitere vorzugsweise vorgesehene Ausgestaltung sieht nun vor, dass - wie am besten aus der Figur 6 ersichtlich ist - der Laser-Schweißkopf 1 eine Kühleinrichtung 10 aufweist, welche es erlaubt, aus dem Inneren des Gehäuses 2 Wärme abzuführen, insbesondere die Strahlaufbereitungseinheit 5 zu kühlen. Hierzu ist vorzugsweise vorgesehen, dass das in einer Halterung 11 aufgenommene Innenrohr 9 von einem Kühlmedium K zumindest bereichsweise umströmt wird. Das Kühlmedium K wird der Halterung 11 durch eine Eintrittsöffnung 11a zugeführt und verlässt diese durch eine Austrittsöffnung 11b. Das Kühlmedium K tritt durch die Eintrittsöffnung 11a ein, durchströmt dann einen von der Eintrittsöffnung 11a zur Austrittsöffnung 11b verlaufenden Kühlkanal 11c der Halterung 11. Vorzugsweise ist vorgesehen, dass der Kühlkanal 11c umlaufend ausgebildet ist. Als Kühlmittel wird vorzugsweise Druckluft verwendet, es ist aber auch möglich, ein flüssiges oder ein anderes gasförmiges Kühlmittel zu verwenden.

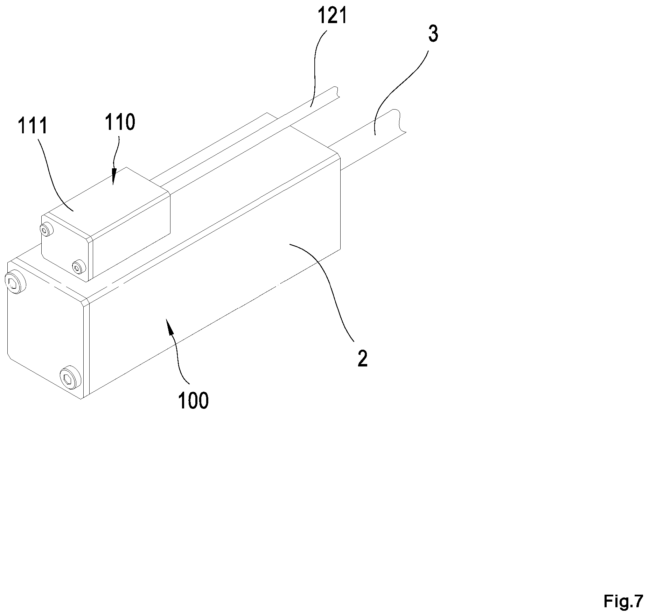

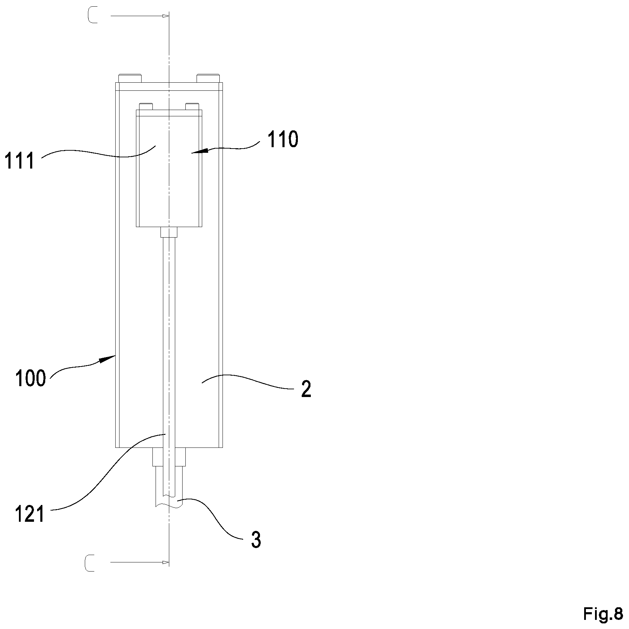

In den Figuren 7 bis 9 ist nun eine zweite Laser-Schweißvorrichtung mit einem Laser-Schweißkopf 100 beschrieben, welche ihrem Grundaufbau nach derjenigen der ersten Laser-Schweißvorrichtung entspricht. Korrespondierende Bauteile werden daher mit den gleichen Bezugszeichen versehen und hinsichtlich ihres Aufbaus und ihrer Funktion nicht mehr erneut beschrieben. Der Laser-Schweißkopf 100 entspricht dem ersten Laser-Schweißkopf 1, weist aber eine allgemein mit 110 bezeichnete Überwachungseinrichtung der Bearbeitungsqualität, insbesondere der Schweißqualität, die bei der Beaufschlagung eines Werkstücks durch mindestens einen aus dem Gehäuse 2 des Laser-Schweißkopfs 100 austretenden Laserstrahl L1, L2 erzielt wird. Wie aus den Figuren 6 und 7 ersichtlich ist, ist diese Überwachungseinrichtung 110 auf dem Gehäuse 2 des Laser-Schweißkopfs 100 aufgesetzt. Dies hat den Vorteil, dass hierdurch eine kompakte Ausgestaltung der aus dem Laser-Schweißkopf 100 und der Überwachungseinrichtung 110 bestehenden Laser-Schweißvorrichtung erzielt werden kann.

Dem Fachmann ist aber ersichtlich, dass eine derartige Anbringung der Überwachungseinrichtung 110 auf dem Gehäuse 2 des Laser-Schweißkopfs 100 nicht zwingend ist. Es ist auch möglich, die Überwachungseinrichtung 110 Schweißkopf-extern vorzusehen, so dass auch ein Laser-Schweißkopf 1 gemäß den Figu-ren 1 bis 4 bei der beschriebenen Laser-Schweißvorrichtung eingesetzt werden kann.

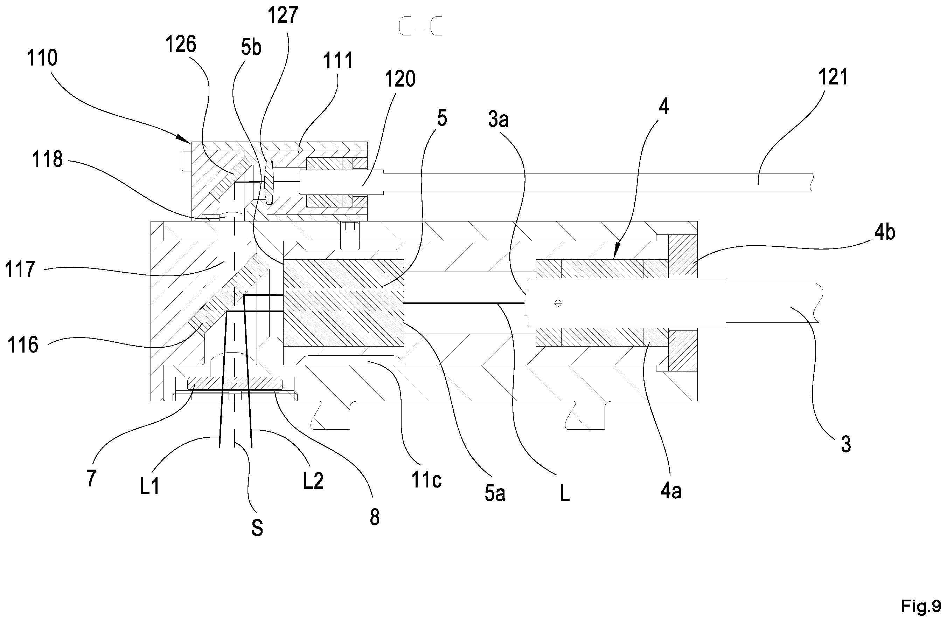

Die Figur 9 zeigt nun einen Schnitt entlang der Linie C-C der Figur 6. Man erkennt wieder den Laser-Schweißkopf 1, wie er in Figur 3 dargestellt ist. Die zur Ausgestaltung des Laser-Schweißkopfs 1 der ersten Ausführungsform gemachten Ausführungen gelten beim Laser-Schweißkopf 100 entsprechend.

Der Laser-Schweißkopf 100 unterscheidet sich aber von demjenigen des ersten Laser-Schweißkopfs dadurch, dass ein Umlenkspiegel 116 halb-durchlässig ausgebildet ist, so dass zwar die aus der Strahlaufbereitungseinheit 5 austretenden Laserstrahlen L1, L2 - wie beim Umlenkspiegel 6 der ersten - umgelenkt werden, aber vom Werkstück reflektierte Strahlung S, welche durch die Öffnung 7 eintritt, den Umlenkspiegel 116 passieren und über einen - in der ersten Form nicht vorhandenen - Strahlengang 117 zu einer Öffnung 118 des Gehäuses 2 gelangen. Über dieser Öffnung 118 ist ein Messkopf 111 angeordnet, welcher dazu dient, die vom Werkstück und insbesondere von der Schweißstelle ausgesandten Strahlung zu erfassen. Hierzu ist bei der beschriebenen Ausführungsform vorgesehen, dass der Messkopf 111 einen Umlenkspiegel 126 aufweist, welcher die dem Messkopf 111 zugeführten Strahlen umlenkt und über eine Kollimationslinse 127 zu einer Sensoranordnung 120 leitet. Signalleitungen 121 führen dann die Messsignale der Sensoranordnung 120 zu einer Auswerteeinrichtung (nicht gezeigt).

Es wird bevorzugt, dass die Sensoranordnung 120 der Überwachungseinrichtung 110 die vom Werkstück und insbesondere von der Schweißstelle reflektierte Strahlung S in mindestens zwei unterschiedlichen Bereichen auswertet, nämlich im Bereich der Prozessstrahlung, also des verwendeten Laserlichts, z. B. bei einem YAG-Laser im Wellenlängen-Bereich von 1460 nm, sowie im Bereich des sichtbaren Lichts, beispielsweise im Wellenlängen-Bereich zwischen 400 und 850 nm und/oder im Infrarotbereich, also beispielsweise im Wellenlängen-Bereich zwischen 1200 und 1700 nm. Es ist für den Fachmann ersichtlich, dass die Erfassung und/oder Auswertung der reflektierten Strahlung S im Bereich des sichtbaren Lichts und/oder im infraroten Bereich nicht über die gesamte Bandbreite der vorgenannten Wellenlängen-Bereiche erfolgen muss, so dass es durchaus ausreicht, dass die Strahlung S in einem Teilbereich oder in mehreren Teilbereichen dieser Wellenlängen-Bereiche zwischen 400 und 850 nm bzw. zwischen 1200 und 1700 nm erfasst und ausgewertet wird.

Eine große Intensität der reflektierten Prozessstrahlung spricht im Allgemeinen dafür, dass die Schweißpunkte nur unzureichend ausgebildet sind: Ein hoher Anteil von reflektierter Prozessstrahlung charakterisiert, dass an der Schweißstelle eine hinreichende Schmelze noch nicht ausgebildet ist.

Je höher der infrarote Anteil der reflektierten Strahlung S ist, desto größer sind normalerweise die Schweißpunkte.

Die Messung der reflektierten Strahlung S im sichtbaren Bereich erlaubt es in einfacher Art und Weise die Temperatur der Schweißstelle zu erfassen. Hierdurch können insbesondere zu hohe Temperaturen, die zu einer Porosität der Schweißstelle führen können, vermieden werden.

Es ist im Allgemeinen ausreichend, die reflektierte Strahlung S außer im Bereich der Wellenlänge der Prozessstrahlung auch in einem der beiden anderen Bereiche, also entweder im Bereich des sichtbaren Lichts oder im Infrarotbereich zu erfassen und auszuwerten. Bevorzugt wird jedoch, dass die reflektierte Strahlung S in den drei vorgenannten Bereichen - Prozessstrahlung, sichtbares Licht und infrarote Strahlung - erfasst und ausgewertet wird.

Die aktuell detektierten Werte werden von der Auswerteeinrichtung mit zuvor erfassten Daten verglichen. Hierdurch ist es in einfacher Art und Weise möglich, vorzugsweise fortlaufend die Qualität der von dem mindestens einen aus dem Laser-Schweißkopf 1 austretenden Laserstrahl L1, L2 dargestellten Schweißstelle zu überprüfen und/oder den mindestens einen Laserstrahl L1, L2 entsprechend zu regeln. Insbesondere durch eine Änderung der Fokuslage und/oder des Fokusdurchmessers mindestens eines Laserstrahls L1, L2 kann eine Verbesserung der Schweißqualität erreicht werden.

## Patentansprüche

1. Verwendung einer Schweißvorrichtung (200) anstelle einer Widerstandsschweißvorrichtung zum Verschweißen zweier Werkstücke, wobei eine Schweißvorrichtung (200) zum Verschweißen eines ersten Werkstücks (W1) und eines zweiten Werkstücks (W2), verwendet wird, wobei die Schweißvorrichtung (200) eine erste Zuführeinrichtung (210), mittels der der Schweißvorrichtung (200) ein erstes Werkstück (W1) zuführbar ist, und eine zweite Zuführeinrichtung, mittels derer der Schweißvorrichtung (200) ein zweites Werkstück (W2) zuführbar ist, aufweist, und wobei die Schweißvorrichtung (200) eine Schweißeinrichtung zum Verschweißen der beiden Werkstücke (W1, W2) besitzt, dass die Schweißvorrichtung (200) einen Laser-Schweißkopf (1; 100) aufweist, durch den die zum Verschweißen der beiden Werkstücke (W1, W2) erforderliche Schweißenergie zuführbar ist, dass die Schweißvorrichtung (200) eine Überwachungseinrichtung (110) mit einer Sensoranordnung (120) aufweist, durch welche Strahlung (S), die von einem von dem oder den aus dem Laser-Schweißkopf (1; 100) austretenden Laser-Strahlen (L1, L2) beaufschlagten Werkstück (W) reflektiert wird, erfassbar ist, und dass die Überwachungseinrichtung (110) die vom Werkstück (W) reflektierte Strahlung (S) in mindestens zwei Wellenlängen-Bereichen erfasst und auswertet, wobei die Überwachungseinrichtung (110) die reflektierte Strahlung (S) im Bereich der Wellenlänge des oder der vom Laser-Schweißkopf (1; 100) austretenden Laser-Strahlen (L1, L2) sowie im infraroten Bereich, vorzugsweise in einem zwischen 1200 und 1700 nm liegenden Bereich oder in einem oder in mehreren Teilbereichen, und/oder im Bereich des sichtbaren Lichts, vorzugsweise in einem zwischen 450 und 850 nm liegenden Bereich oder in einem oder in mehreren Teilbereichen des vorgenannten Bereichs erfasst und auswertet, **dadurch gekennzeichnet, dass** der Laser-Schweißkopf (1; 100) ein Gehäuse (2) besitzt, in welches mindestens eine Lichtleitfaser (3) mündet, durch welche dem Laser-Schweißkopf (1) ein von einer externen Strahlungsquelle erzeugter Laserstrahl (L) zuführbar ist, dass im Gehäuse (2) eine Strahlaufbereitungseinheit (5) mit einem Eintrittsbereich (5a) und einem Austrittsbereich (5b) angeordnet ist, wobei ein aus dem Faserende (3a) der mindestens einen Lichtleitfaser (3) austretender mindestens einer Laserstrahl zum Eintrittsbereich (5a) der Strahlaufbereitungseinheit (5) geleitet ist und aus dem Austrittsbereich (5b) der Strahlaufbereitungseinheit (5) mindestens ein Laserstrahl (L1, L2) austritt, der durch eine Austrittsöffnung (7) aus dem Gehäuse (2) des Laser-Schweißkopfs (1) geführt wird, und dass der Abstand zwischen dem Faserende (3a) der mindestens einen Lichtleitfaser (3) und dem Eintrittsbereich (5a) der Strahlaufbereitungseinheit (5) veränderbar ist, und dass ein Endbereich (3') mindestens einer Lichtleitfaser (3) in einer axialen Richtung verschiebbar im Gehäuse (2) des Laser-Schweißkopfs (1) angeordnet ist.

2. Verwendung einer Schweißvorrichtung nach Anspruch 1, **dadurch gekennzeichnet, dass** der Laser-Schweißkopf (100) einen Umlenkspiegel (116) aufweist, so dass die vom Werkstück (W) reflektierte Strahlung (S) über einen Strahlengang (117) zu einer Öffnung (118) des Gehäuses (2) gelangt.

3. Verwendung einer Schweißvorrichtung nach einem der vorangehenden Ansprüche, **dadurch gekennzeichnet, dass** über der Öffnung (118) des Gehäuses (2) des Laser-Schweißkopfs (100) ein Messkopf (111) angeordnet ist, und dass der Messkopf (111) einen weiteren Umlenkspiegel (126) aufweist, welcher die dem Messkopf (111) zugeführte Strahlen umlenkt und zu der Sensoranordnung (120) leitet.

4. Verwendung einer Schweißvorrichtung (200) nach einem der vorangehenden Ansprüche, **dadurch gekennzeichnet, dass** die Lichtleitfaser (3) oder mindestens eine der Lichtleitfasern (3) und/oder die Strahlaufbereitungseinheit (5) zueinander relativ beweglich im Gehäuse (2) angeordnet sind.

5. Verwendung einer Schweißvorrichtung (200) nach einem der vorangehenden Ansprüche, **dadurch gekennzeichnet, dass** die Strahlaufbereitungseinheit (5) eine galvanometrische Strahlaufbereitungseinheit ist.

6. Verwendung einer Schweißvorrichtung (200) nach einem der vorangehenden Ansprüche, **dadurch gekennzeichnet, dass** der Laser-Schweißkopf (1; 100) mindestens eine Spanneinheit (4) aufweist, durch welche mindestens eine der Lichtleitfasern (3) im Gehäuse (2) in mindestens zwei Positionen festlegbar ist.

7. Verwendung einer Schweißvorrichtung (200) nach einem der vorangehenden Ansprüche, **dadurch gekennzeichnet, dass** im Gehäuse (2) ein Innenrohr (9) angeordnet ist, und dass die Strahlaufbereitungseinheit (5) im Innenrohr (9) aufgenommen ist, und dass vorzugsweise das Innenrohr (9) im Gehäuse (2) des Laser-Schweißkopfs (1; 100) drehbar angeordnet ist.

8. Verwendung einer Schweißvorrichtung (200) nach einem der vorangehenden Ansprüche, **dadurch gekennzeichnet, dass** der Laser-Schweißkopf (1; 100) eine Kühleinrichtung (10) aufweist, durch welche aus dem Inneren des Gehäuses (2) Wärme abführbar ist, und dass vorzugsweise in einer das Innenrohr (9) lagernden Halterung (11) mindestens ein Kühlkanal (11c) der Kühleinrichtung (10) angeordnet ist, dem ein Kühlmedium (K) zuführbar ist, und dass weiter vorzugsweise sich der Kühlkanal (11c) um zumindest einen Teil des Umfangsbereichs des die Strahlaufbereitungseinheit (5) aufnehmenden Innenrohrs (9) erstreckt.

9. Verwendung einer Schweißvorrichtung (200) nach einem der vorangehenden Ansprüche, **dadurch gekennzeichnet, dass** die Schweißvorrichtung (200) eine Positioniereinrichtung (240) aufweist, durch welche ein vom ersten Werkstück (W1) abgetrenntes Teilstück an einer Schweißstelle (S) auf dem zweiten Werkstück (W2) positionierbar ist.

## Claims

1. Use of a welding device (200) instead of a resistance welding device for welding two workpieces, wherein a welding device (200) for welding a first workpiece (W1) and a second workpiece (W2) is used, wherein the welding device (200) comprises a first feeding device (210), by means of which a first workpiece (W1) can be fed to the welding device (200), and a second feeding device, by means of which a second workpiece (W2) can be fed to the welding device (200), wherein the welding device (200) has a welding system for welding the two workpieces (W1, W2), in that the welding device (200) has a laser welding head (1; 100), by means of which the welding energy required for welding the two workpieces (W1, W2) can be supplied, wherein the welding device (200) has got a controlling system (110) having a sensor arrangement (120), by which radiation (S), which is reflected by the workpiece (W) being impacted by one laser beam or the laser beams (L1, L2) exiting the laser welding head (1; 100), can be detected, and wherein the controlling system (110) evaluates the radiation (S) reflected by the workpiece (W) in at least two wavelength regions, wherein the controlling system (110) detects and evaluates the reflected radiation (S) in a region of the wavelength of the at least one laser beam (L1, L2) exiting the laser welding head (1; 100) as well as in an infrared region, in particular in the region between 1200 and 1700 nm or in one or several partial regions thereof, and/or in the region of visible light in particular in the region between 450 and 850 nm or in one or several partial regions, **characterized in that** the laser welding head (1; 100) has a housing (2), into which at least one optical fiber (3) is led, by means of which a laser beam (L) generated by an external radiation source can be fed to the laser welding head (1), that in the housing (2) a beam processing unit (5) having an entry region (5a) and an exit region (5b) is provided, whereby at least one laser beam exiting a fiber end (3a) of the at least one optical fiber (3) is guided to the entry region (5a) of the beam processing unit (5) and exits the laser beam processing unit (5) through the exit region (5b), said laser beam being led through an outlet opening (7b) of the housing (2) of the laser welding head (1), that the distance between the fiber end (3a) of the at least one optical fiber (3) and the entry region (5a) of the beam processing unit (5) can be altered, and that an end region (3') of at least one optical fiber (3) can be displaced in an axial direction in the housing (2) of the laser welding head (1).

2. Use of a welding device according to claim 1, **characterized in that** the laser welding head (100) has a deflection mirror (116) so that the radiation (S) reflected by the workpiece (W) reaches an opening (118) of the housing (2) via a beam path (117).

3. Use of a welding device according to one of the preceding claims, **characterized in that** a measuring head (111) is arranged above the opening (118) of the housing (2) of the laser welding head (100), and that the measuring head (111) has got a further deflection mirror (126), which deflects the beams supplied to the measuring head (111) and guides them to the sensor arrangement (120).

4. Use of a welding device (200) according to one of the previous claims, **characterized in that** the optical fiber (3) or at least one of the optical fibers (3) and/or the beam processing unit (5) are arranged in the housing (2) relatively movable to each other.

5. Use of a welding device (200) according to one of the previous claims, **characterized in that** the beam processing unit (5) is a galvanometric beam processing unit.

6. Use of a welding device (200) according to one of the previous claims, **characterized in that** the laser welding head (1; 100) comprises at least one clamping unit (4) by means of which at least one of the optical fibers (3) can be fixed in the housing (2) in at least two positions.

7. Use of a welding device (200) according to one of the previous claims, **characterized in that** an inner tube (9) is arranged in the housing (2), and that the beam processing unit (5) is accommodated in said inner tube (9), and that the inner tube (9) is arranged preferably rotably in the housing (2) of the laser welding head (1; 100).

8. Use of a welding device (200) according to one of the previous claims, **characterized in that** the laser welding head (1; 100) has a cooling system (10), through which heat can be dissipated from the interior of the housing (2), and that preferably in a holder (11) supporting the inner tube (9) at least one cooling channel (11c) of the cooling system (10) is arranged, to which a cooling medium (K) can be fed, and that further preferably the cooling channel (11c) extends around at least a part of the circumferential region of the inner tube (9) accommodating the beam processing unit (5).

9. Use of a welding device (200) according to one of the previous claims, **characterized in that** the welding device (200) comprises a positioning device (240), by means of which a portion separated from the first workpiece (W1) can be positioned at the welding point (S) on the second workpiece (W2).

## Revendications

1. Utilisation d'un dispositif de soudage (200) à la place d'un dispositif de soudage par résistance pour souder deux pièces à usiner, dans laquelle un dispositif de soudage (200) est utilisé pour souder une première pièce à usiner (W1) et une deuxième pièce à usiner (W2), dans laquelle le dispositif de soudage (200) présente un premier dispositif d'alimentation (210) permettant d'amener au dispositif de soudage (200) une première pièce à usiner (W1) et un deuxième dispositif d'alimentation permettant d'amener au dispositif de soudage (200) une deuxième pièce à usiner (W2) et dans laquelle le dispositif de soudage (200) possède un système de soudage pour souder les deux pièces à usiner (W1, W2), le dispositif de soudage (200) présente une tête de soudage laser (1 ; 100), par laquelle l'énergie de soudage nécessaire au soudage des deux pièces à usiner (W1, W2) peut être amenée, le dispositif de soudage (200) présente un système de surveillance (110) avec un ensemble capteur (120) par lequel le rayonnement (S), qui est réfléchi par une pièce à usiner (W) soumise à l'action du ou des rayons laser (L1, L2) sortant de la tête de soudage laser (1 ; 100), peut être détecté et le système de surveillance (110) détecte et évalue le rayonnement (S) réfléchi par la pièce à usiner (W) dans au moins deux plages de longueurs d'onde, dans laquelle le système de surveillance (110) détecte et évalue le rayonnement (S) réfléchi dans la plage de longueurs d'onde du ou des rayons laser (L1, L2) sortant de la tête de soudage laser (1 ; 100) ainsi que dans la plage infrarouge, de préférence dans une plage comprise entre 1200 et 1700 nm ou dans une ou plusieurs plages partielles, et/ou dans la plage de la lumière visible, de préférence dans une plage comprise entre 450 et 850 nm ou dans une ou plusieurs plages partielles de la plage précitée, **caractérisée en ce que** la tête de soudage laser (1 ; 100) possède un boîtier (2) dans lequel débouche au moins une fibre optique (3), par laquelle un faisceau laser (L) généré par une source de rayonnement externe peut être amené à la tête de soudage laser (1), qu'une unité de traitement de faisceau (5) avec une zone d'entrée (5a) et une zone de sortie (5b) est disposée dans le boîtier (2), dans laquelle au moins un faisceau laser sortant de l'extrémité de fibre (3a) de l'au moins une fibre optique (3) est dirigé vers la zone d'entrée (5a) de l'unité de traitement de faisceau (5) et au moins un faisceau laser (L1, L2) qui est guidé à travers une ouverture de sortie (7) hors du boîtier (2) de la tête de soudage laser (1), sort de la zone de sortie (5b) de l'unité de traitement de faisceau (5), et que la distance entre l'extrémité de fibre (3a) de l'au moins une fibre optique (3) et la zone d'entrée (5a) de l'unité de traitement de faisceau (5) est modifiable, et qu'une zone d'extrémité (3') d'au moins une fibre optique (3) est disposée de manière coulissante dans une direction axiale dans le boîtier (2) de la tête de soudage laser (1).

2. Utilisation d'un dispositif de soudage selon la revendication 1, **caractérisée en ce que** la tête de soudage laser (100) présente un miroir de déviation (116) de telle sorte que le rayonnement (3) réfléchi par la pièce à usiner (W) parvient par un chemin optique (117) à une ouverture (118) du boîtier (2).

3. Utilisation d'un dispositif de soudage selon l'une quelconque des revendications précédentes, **caractérisée en ce qu'**une tête de mesure (111) est disposée au-dessus de l'ouverture (118) du boîtier (2) de la tête de soudage laser (100), et que la tête de mesure (111) présente un autre miroir de déviation (126) qui dévie les faisceaux amenés à la tête de mesure (111) et les dirige vers l'ensemble capteur (120).

4. Utilisation d'un dispositif de soudage (200) selon l'une quelconque des revendications précédentes, **caractérisée en ce que** la fibre optique (3) ou au moins une des fibres optiques (3) et/ou l'unité de traitement de faisceau (5) sont disposées de manière mobile l'une par rapport à l'autre dans le boîtier (2).

5. Utilisation d'un dispositif de soudage (200) selon l'une quelconque des revendications précédentes, **caractérisée en ce que** l'unité de traitement de faisceau (5) est une unité de traitement de faisceau galvanométrique.

6. Utilisation d'un dispositif de soudage (200) selon l'une quelconque des revendications précédentes, **caractérisée en ce que** la tête de soudage laser (1 ; 100) présente au moins une unité de serrage (4) par laquelle au moins une des fibres optiques (3) dans le boîtier (2) peut être fixée dans au moins deux positions.

7. Utilisation d'un dispositif de soudage (200) selon l'une quelconque des revendications précédentes, **caractérisée en ce qu'**un tube intérieur (9) est disposé dans le boîtier (2), et que l'unité de traitement de faisceau (5) est logée dans le tube intérieur (9), et que de préférence le tube intérieur (9) est disposé de manière à pouvoir tourner dans le boîtier (2) de la tête de soudage laser (1 ; 100).

8. Utilisation d'un dispositif de soudage (200) selon l'une quelconque des revendications précédentes, **caractérisée en ce que** la tête de soudage laser (1 ; 100) présente un système de refroidissement (10) par lequel de la chaleur peut être évacuée de l'intérieur du boîtier (2), et qu'au moins un canal de refroidissement (11c) du système de refroidissement (10), auquel un milieu de refroidissement (K) peut être amené, est disposé de préférence dans un support (11) supportant le tube intérieur (9), et que le canal de refroidissement (11c) s'étend en outre de préférence autour d'au moins une partie de la zone périphérique du tube intérieur (9) recevant l'unité de traitement de faisceau (5).

9. Utilisation d'un dispositif de soudage (200) selon l'une quelconque des revendications précédentes, **caractérisée en ce que** le dispositif de soudage (200) présente un système de positionnement (240) par lequel une pièce partielle séparée de la première pièce à usiner (W1) peut être positionnée sur un point de soudage (S) sur la deuxième pièce à usiner (W2).
